# EUROPEAN PATENT APPLICATION

(11) **EP 2 953 343 A1**
(43) Date of publication of application: **09.12.2015**
(21) Application number: 14305837.8
(22) Date of filing: 03.06.2014
(51) Int. Cl.: H04N 1/62, G06F 17/30

(54) **Method for sorting and homogenizing a group of images, corresponding device, computer program and non-transitory computer-readable medium**

(71) Applicant: Thomson Licensing, 92130 Issy-les-Moulineaux (FR)
(72) Inventor: Sabater, Neus, 35576 CESSON SEVIGNE (FR); Hellier, Pierre, 35576 CESSON SEVIGNE (FR); Demoulin, Vincent, 35576 CESSON SEVIGNE (FR)
(74) Representative: Huchet, Anne

(57) **Abstract**

The invention relates to a method for homogenizing at least one image feature of a group of *N* images, *N* being an integer such that N > 2,

According to the invention, said method implements the following steps:
- clustering (11) said group of *N* images delivering at least one cluster to homogenize comprising at least three images of said group of *N* images, and presenting a distance between said at least three images lower than a maximal predetermined value *D,*
- from said at least one cluster to homogenize, determining (12) an example image,
- using said example image for homogenizing (13) said at least one image feature in said at least three images of said at least one cluster to homogenize.

## Description

### 1. Technical Field

The invention concerns the image processing, and in particular the processing of digital photo collections.

More specifically, the invention relates to the correction of at least one feature (color, image resolution...) of images, and proposes, in particular, an optimized homogenization method for delivering an optimized photo collection.

The invention finds particular application in the photo editing, the content creation of image or video type, especially during the post-production phase to finalize the homogenization content before distribution or display, for improving the user experience.

### 2. Background Art

In recent years, the blooming of low cost digital cameras, and the popularization of cell phones comprising a digital camera, has led to a proliferation of very large digital photo collections.

Classifying and organizing such large databases can be quickly overwhelming for a user. Furthermore, such photo collections often contain pictures (or images) taken by different people with different cameras.

Indeed, the last trend seems to go on the direction of shared photo collections like the applications developed by Dropbox®, Google Drive® or the icloud Shared Photo Streams by Apple®.

For example, a photo collection permits to gather pictures from all the guests of a wedding or from all the invitees of a birthday party.

Such images of a photo collection can be captured by the same camera but using different camera settings (ISO, resolution, lens speed and aperture) or shot in different conditions (different lighting, with or without flash,...).

As a result, the final photo collection can be huge and can lack of harmony. For instance, the same object (wedding dress, birthday cake,...) may appear with different colors or different resolutions.

To improve the user experience when displaying a photo collection the user would need to manually homogenize the whole photo collection.

Currently, for reach the homogenization of a whole photo collection the user would have to process manually each image after image of the photo collection, which is discouraging because such a task is time-consuming and requires a lot of human interaction.

Indeed, the well-known photo editing methods, such as Photoshop® or Gimp® do not propose a solution to homogenize a group of images but permits only to correct one image starting from an "example image".

In addition, selecting a "good" image, as an "example image", is a crucial choice in all well-known homogenizing techniques such as color-based modification algorithms for instance.

Thus, there remains a significant need for enhancing the homogenization of a group of images belonging to a photo collection for improving the user experience.

### 3. Summary Of Invention

The invention proposes a new solution as a method for homogenizing at least one image feature of a group of *N* images, *N* being an integer such that N > 2.

According to the invention, said method implements the following steps:
- clustering said group of *N* images delivering at least one cluster to homogenize comprising at least three images of said group of *N* images, and presenting a distance between said at least three images lower than a maximal predetermined value *D,*
- from said at least one cluster to homogenize, determining an example image,
- using said example image for homogenizing said at least one image feature in said at least three images of said at least one cluster to homogenize.

The homogenizing of a group of images, such as a photo collection gathering photos captured by different contributors, is therefore based on an optimised combination of a clustering and an homogenizing steps permitting to obtain (automatically or semi-automatically) a group of images that is both classified and homogenized, said clustering and said subsequent homogenizing taking into account a maximal predetermined value D.

Indeed, the homogenizing step according to the present technique can not be implemented alone and requires previously the determining of an example image, also called a centroid, from at least one cluster to homogenize delivered by a clustering step taking into account a maximal predetermined value D for gathering the images comprised in said at least one cluster.

It has to be noted that according to the present technique, the clustering can be defined as *"the assignment of a set of observations into subsets (clusters) so that observations in the same subset (cluster) are similar in some sense".*

Such a definition can be found in the powerpoint presentation entitled *"*Clustering Techniques and Applications to Image Segmentation" delivered by Liang Shan for a course in 2009 at the computer science department of the University of North California.

In other words, clustering is the task of grouping a set of objects in such a way that objects in the same group (called a cluster) are more similar (in some sense or another) to each other than to those in other groups (clusters).

Consequently, for a photo collection, even if it is a huge one, a good homogenizing of at least one image feature in the whole collection can be obtained by using at least one appropriate example image dedicated for homogenizing each cluster to homogenize. Indeed, the example image determined from the cluster to homogenize, presents a distance with the images of said cluster to homogenize, which is lower than the maximal predetermined value D.

This example image is then used for homogenizing the cluster to homogenize, which ensures that the distance between all original images and their modified version after the homogenizing does not exceed said predetermined value D.

As a consequence, a certain fidelity to the original images is obtained, which preserves the intend of each contributor, up to a certain extent.

It has to be noted that when several clusters are delivered by the clustering step, an appropriate example image is determined for each cluster.

In other words, in this context dealing with several clusters, several distinct example images are determined in order to be respectively dedicated for homogenizing the cluster from which they have been respectively determined.

Thus, each cluster is homogenized independently from the other cluster using its proper example image.

According to a particular aspect of the invention, said step of clustering delivers at least two clusters and wherein said steps of determining and of homogenizing are successively implemented in parallel for each of said at least two clusters.

Thus, even if the image collection is huge, the whole group of N images is quickly processed for delivering automatically homogenized clusters.

Consequently, the method according to the present invention prevents the user from manually spending time on the tedious task of homogenizing a very large photo collection, since the present invention provides automatically and quickly an optimised homogenised photo collection obtained by using an appropriate example image for each cluster to homogenize.

According to a particular aspect of the disclosure, the distance between said at least three images is an Earth Mover's Distance (EMD).

Indeed, using Earth Mover's Distance (EMD) presents an interest since a computed sub-product of this distance, the flow between two image feature histograms, for example color histograms, can be reused for the homogenizing step.

Such a computed sub-product of this distance corresponds for example to the optimal flow F, which is determined page 105 in the section "4. The Earth Mover's Distance" of the article *("*The Earth Mover's Distance as a Metric for Image Retrieval") by Y. Rubner in the International Journal of Computer Vision 40(2), 99-121, 2000.

For example, such computed sub-product obtained when computing an EMD distance between the images of the cluster, is reused during a color transfer substep using an optimal transport like the one disclosed in the patent application n°EP13350698 (not published).

It can be noted that other ways of computing the distance between, for example, image feature histograms of the images of a cluster can be used. Such other alternatives of computing said distance are for example described by S-H. Cha ("Taxonomy of Nominal Type Histogram Distance Measures"), American Conference on Applied Mathematics (MATH'08), Harvard, Massachusetts, USA, March 24-26, 2008, pp 325-330.

According to a particular embodiment, said clustering is a color-based clustering.

For example, according to such embodiment, it is possible to gather in a cluster each image of the group of images presenting an identical color. For instance, all the images presenting a dominant green color in more than 50% of the pixels that they each comprise are gathered in a "green cluster". Thus, it is possible to extract the images from the photo collection that present a green background.

Such a color-based clustering is for example implemented in the PhotoTOC® tool. It has to be noted that PhotoTOC® delivers a photo collection which is sorted using the color of the images and metadata. However, this tool does not permit a user to homogenize quickly and automatically a whole photo collection. Indeed, if the user wants to obtain an homogenized color classified photo collection, he will have to process manually each image of the sorted photo collection, which itself remains a tedious task.

It can be noted that other clustering techniques could be used, for example a clustering based on a similarity of points of interest, or a more complex clustering both based on a similarity of color and on a similarity of points of interest

Optionally, said step of clustering delivers at least two clusters and comprises a substep of rejecting one of said at least two clusters when receiving, from a user, a request of rejection, or when receiving, from a user, a request of selection of said at least one cluster to homogenize among said at least two clusters.

Such an option permits to reject a cluster of no interest for the user. For example, this is the case when a cluster is formed by images, which are "similar" because each of them does not present any similarity with any other clusters. Such images correspond thus to isolated images or images presenting capture problems and can be thus deleted or kept, but not processed by the following steps of determining and homogenizing of the present method.

According to a particular aspect of the disclosure, said step of clustering implements at least one iteration of the following substeps:
- forming an undirected graph G comprising nodes, each node representing an image *Iᵢ* of said group of *N* images and being connected between each other by a distance *dᵢⱼ*, with 1 ≤ *i* ≤ *N* and *i* ≠ *j* with 1 ≤ *j* ≤ *N,*
- among said *N* images, determining a source image *Iₛ* and a target image *Iₜ* presenting the largest distance max_*dᵢⱼ* between them,
- cutting said graph into two clusters between said source image *Iₛ* and said target image *Iₜ*, each cluster being used for a following iteration if said cluster presents an energy higher than a predetermined value, or if the largest distance max_*dᵢⱼ* of each cluster is higher than said maximal predetermined value *D.*

According to such embodiment, it can be noted that the clustering is based on a graphic representation permitting to illustrate the similarity between the images of said group of images, for example a photo collection.

Other known clustering methods can also be implemented, like the Mean-Shift Based Clustering described by B. Georgescu ("Mean Shift Based Clustering in High Dimensions: A Texture Classification Example"), Ninth IEEE International Conference on computer Vision, 2003, pp 456463, vol 1, 13-16 October 2003 and also described by Y. Cheng ("Mean shift, mode seeking, and clustering») IEEE Transactions on Pattern Analysis and Machine Intelligence, 17(8), 790-799 August 1995, or other clustering techniques like the K-means clustering technique as described in the powerpoint presentation entitled *"*Clustering Techniques and Applications to Image Segmentation" delivered by Liang Shan for a course in 2009 at the computer science department of the University of North California.

According to a particular aspect of such embodiment, the substep of cutting said graph implements a Min-Cut/Max-Flow algorithm as described by Y. Boykov and V. Kolmogorov ("An Experimental Comparison of Min-Cut/Max-Flow Algorithms for Energy Minimization in Vision"), IEEE Transactions on Pattern Analysis and Machine Intelligence (PAMI), Vol 26, No9, pp. 1124-1137, Sept 2004.

According to a first variant of the disclosure, said step of clustering comprises a substep of displaying to a user said cluster to homogenize, and said step of determining an example image, from said at least one cluster to homogenize, implements a step of receiving, from said user, a selection of said example image among said at least three images of said cluster to homogenize.

Thus, according to this aspect, the user selects manually the example image used in the following for the homogenizing step.

According to a second variant of the disclosure, said step of clustering comprises a substep of determining an image barycentre of said cluster to homogenize, and wherein said example image corresponds to said image barycentre.

In such a second variant, the image barycentre is not most of the times a real image belonging to said cluster to homogenize. In other words, the image barycentre is synthetized from the cluster to homogenize and does not really exist in the group of images, which is processed but the technique according to the invention.

Using the image barycentre as the example image permits to provide the result of the following homogenizing step with a certain fidelity to all of the original images, which is advantageous when it is desired to preserve the intend of each contributor of the group of images (e.g. photo collection).

According to a third variant of the disclosure, said step of clustering comprises a substep of determining an image barycentre of said cluster to homogenize, and said example image corresponds to an image of said at least three images of said cluster to homogenize being the closest from said image barycentre.

Such a third variant permits thus to obtain an example image, which really belongs to the cluster to homogenize, and which is the closest from the barycentre image permitting to obtain a faithful homogenized result.

According to a fourth variant, said example image is determined among said at least three images of said cluster to homogenize, and corresponds to one of said at least three images such that the sum of the Earth Mover's Distances (EMD), between it and the other images of said group of images being out of said cluster to homogenize, is minimal.

In other words, in this case the example image is automatically the medoïd of the cluster.

Such variant takes advantage of the clustering step implementing an Earth Mover's Distances (EMD), since a computed sub-product of this distance, the flow between two image feature histograms, for example color histograms, can be reused for the homogenizing step.

According to a particular aspect of the disclosure, said at least one image feature to homogenize is of the type belonging to the group comprising:
- a color image feature,
- a contrast image feature,
- a luminance image feature,
- a texture image feature,
- a white balance image feature,
- etc.

According to another aspect of the disclosure, said method comprises a preliminary step of receiving a maximal predetermined value D entered by a user.

Thus, according to this particular aspect, the user decides how different he allows the images to be after the homogenization compared to the original images.

Another aspect of the disclosure concerns a device for homogenizing at least one image feature of a group of N images, N being an integer such that N > 0.

According to the invention, said for homogenizing at least one image feature of a group of N images comprises:
- a module for clustering said group of images delivering at least one cluster to homogenize comprising at least three images of said group of images, and presenting a distance between said at least three images lower than a maximal predetermined value *D,*
- a module for determining an example image from said at least one cluster to homogenize,
- a module for using said example image for homogenizing said at least one image feature in said at least three images of said at least one cluster to homogenize.

Such a device for homogenizing at least one image feature of a group of *N* images is particularly adapted to implement the method for homogenizing at least one image feature of a group of *N* images. It is for example integrated in a phone terminal, a computer, a tablet, etc..

Of course, this device will comprise the different features relating to the method for homogenizing at least one image feature of a group of *N* images according to the invention, which have been previously described and, which can be taken together or separately. Thus, the features and advantages of this device are the same as those of the method for homogenizing at least one image feature of a group of *N* images. Therefore, they are not described in more detail.

The disclosure further relates to a computer program product downloadable from a communication network and/or recorded on a medium readable by computer and/or executable by a processor, comprising program code instructions for implementing said method sorting a plurality of images of a database according, and/or for implementing the steps of the method for homogenizing at least one image feature of a group of *N* images according to the present disclosure.

The disclosure also relates to a non-transitory computer-readable medium comprising a computer program product recorded thereon and capable of being run by a processor, including program code instructions for implementing said method for homogenizing at least one image feature of a group of *N* images according to the present disclosure.

Although examples of the invention have been described hereinabove in relation with a limited number of embodiments, those skilled in the art, when reading this description, will understand that other embodiments can be imagined without leaving the scope of this invention.

In particular, while not explicitly described, the present embodiments may be employed in any combination or sub-combination.

As will be appreciated by one skilled in the art, aspects of the present principles can be embodied as a device, method or computer readable medium. Accordingly, aspects of the present principles can take the form of an entirely hardware embodiment, an entirely software embodiment (including firmware, resident software, micro-code, and so forth), or an embodiment combining software and hardware aspects than can all generally be referred herein as a "circuit", "module", or "device". Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a random access memory (RAM); a read-only memory (ROM); an erasable programmable read-only memory (EPROM or Flash memory); a portable compact disc read-only memory (CD-ROM); an optical storage device; a magnetic storage device; or any suitable combination of the foregoing.

Moreover, for example, it will be appreciated by those skilled in the art that the block diagrams presented herein represent conceptual views of illustrative system components and/or circuitry embodying the principles of the invention. Similarly, it will be appreciated that any flow charts, flow diagrams, state transition diagrams, pseudo-code, and the like represent various processes which may be substantially represented in computer readable storage media and so executed by a computer or processor, whether or not such computer or processor is explicitly shown.

### 4. Brief Description of Drawings

Other characteristics and advantages of embodiments of the invention shall appear when reading the following description, provided by way of a non-restricted and indicative example (all of the embodiments of the invention are not limited to the characteristics and advantages of the embodiments described hereinafter), and the annexed drawings, wherein:
- Figure 1 illustrate the general principle of the present technique,
- Figures 2A to 2D illustrate four embodiments of the present technique,
- Figures 3A to 3C illustrate three example of clusters obtained according to the invention,
- Figures 4A and 4B illustrate respectively a cluster before homogenization and cluster after homogenization,
- Figure 5 presents the simplified structure of a device for homogenizing at least one image feature of a group of N images, N being an integer such that N > 2 according to the invention.

### 5. Description of Embodiments

### 5.1 General Principle

The invention, according to its different embodiments, is based on a joined clustering and homogenizing of a group of images.

More precisely, the clustering and the homogenizing steps according to the present invention are joined since the result of the clustering is used for the subsequent homogenizing step.

Indeed, the clustering of the group of images delivers at least one cluster, said cluster comprising at least three images, and presenting a distance between said at least three images lower than a maximal predetermined value D.

Starting from said at least one cluster, an example image is determined and then used for homogenizing at least one feature in all the images belonging to the at least one cluster delivered by said clustering step.

Since, the example image is determined from the cluster to homogenize, the example image presents a distance with the images of said cluster to homogenize, which is lower than the maximal predetermined value D.

This example image is then used for homogenizing the cluster to homogenize, which ensures that the distance between all original images and their modified version after the homogenizing does not exceed said predetermined value D.

As a consequence, a certain fidelity to the original images is obtained, which preserves the intend of each contributor, up to a certain extent.

Thus, the strength of the proposed technique is to perform the clustering and homogenizing together, the example image given by the clustering being used for the homogenizing, which ensures that a "good" example image is used for homogenizing at least one feature of a whole cluster.

Such an automatic homogenization of a group of images, which can be large, could be used as a new tool for image assisting a user.

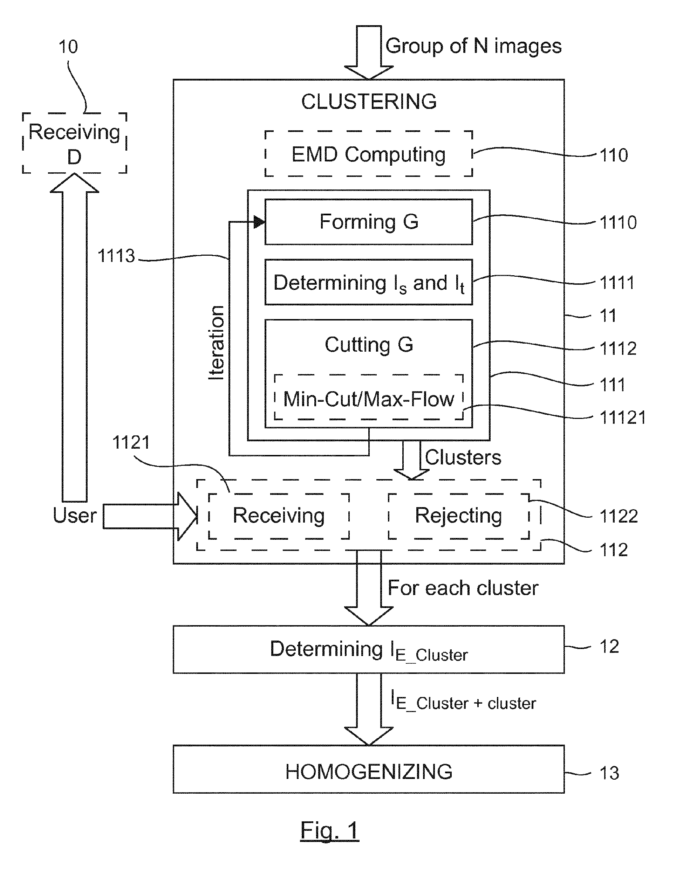

In relation with figure 1, the main steps of the method for homogenizing at least one image feature of a group of *N* images are detailed in the following.

First, a clustering (11) of a group of *N* images is implemented, where *N* > 0 can be large. In other words, the group of *N* images, for example a photo collection related to a birthday or to a wedding is sorted in clusters.

According to the present technique, such a clustering delivers at least one cluster to homogenize comprising at least three images of said group of *N* images, and presenting a distance between said at least three images lower than a maximal predetermined value D.

It has to be noted that according to the present technique, a cluster comprises images *that are "similar in some sense".*

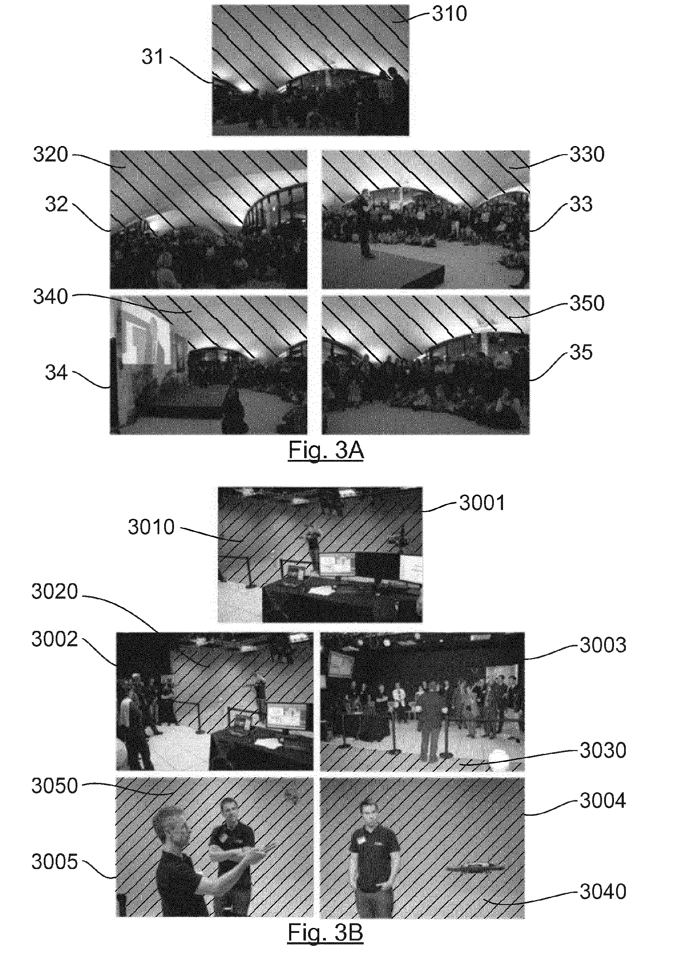

As illustrated by figures 3A to 3C, three clusters respectively represented by figures 3A to 3C are obtained starting from a photo collection about an opening ceremony and using a color-based clustering.

More precisely, in figure 3A the images 31, 31, 33, 34 and 35 present all a purple area corresponding to the purple illuminated ceiling. Thus, these five images are similar in color, and in particular the purple color. More technically, the color distance between these five images is lower than a maximum allowed distance D.

Optionally, a preliminary step of receiving (10) a maximal predetermined value D entered by a user is implemented, so that each time the user launches the automatic homogenizing according to the present technique, he can decide how different he allows the images to be after the homogenization depending on the desired application or depending on the context.

According to another variant the maximal allowed distance D can be set by default.

Among well-known techniques for computing a distance between two images, the computing of Earth Mover's Distance (EMD) can be implemented (110).

Indeed, in the embodiment represented by figure 1, using Earth Mover's Distance (EMD) presents an interest since a computed sub-product of this distance, the flow between two image feature histograms, for example color histograms, can be reused for the homogenizing step (for instance, a computed sub-product obtained when computing an EMD distance between the images of the cluster, is reused during a color transfer substep using an optimal transport like the one disclosed in the patent application n°EP13350698 (not published)).

Once the distance between each couple of images of the photo collection, for example the photo collection about an opening ceremony comprising the thirteen photos *(I*_{1,...,}*I*_{*N*=13} of figures 3A to 3D, is performed, the clustering according to the embodiment illustrated by figure 1 implements at least one iteration (111) of the following the steps:
a. forming (1110) an undirected graph G = (*Iᵢ*|*dᵢⱼ*) comprising nodes, each node representing an image *Iᵢ* of said group of *N* images and being connected between each other by an EMD distance *dᵢⱼ*, with 1 ≤ *i* ≤ *N and i* ≠ *j* with 1≤ *j* ≤ *N.*
b. among said *N* images, determining (1111) a source image (*Iₛ*) and a target image (*Iₜ*) presenting the largest distance max_*dᵢⱼ* between them.
c. cutting (1112) said graph into two clusters between said source image (*Iₛ*) and said target image (*Iₜ*), each cluster being used for a following iteration if said cluster presents an energy higher than a predetermined value, or if the largest distance max*_dᵢⱼ* of each cluster is higher than said maximal predetermined value D.
d. For each cluster, implementing another iteration (1113) of the above steps (a,b,c) while the graph energy decreases or max_*dᵢⱼ* > *D, ∀ i,j* = 1, ... , *N* (*Iᵢ* and *Iⱼ* being into the same cluster).

According to a particular aspect of such embodiment illustrated by figure 1, the substep of cutting (112) said graph G implements a Min-Cut/Max-Flow algorithm (11121) as described by Y. Boykov and V. Kolmogorov ("An Experimental Comparison of Min-Cut/Max-Flow Algorithms for Energy Minimization in Vision"), IEEE Transactions on Pattern Analysis and Machine Intelligence (PAMI), Vol 26, No9, pp. 1124-1137, Sept 2004.

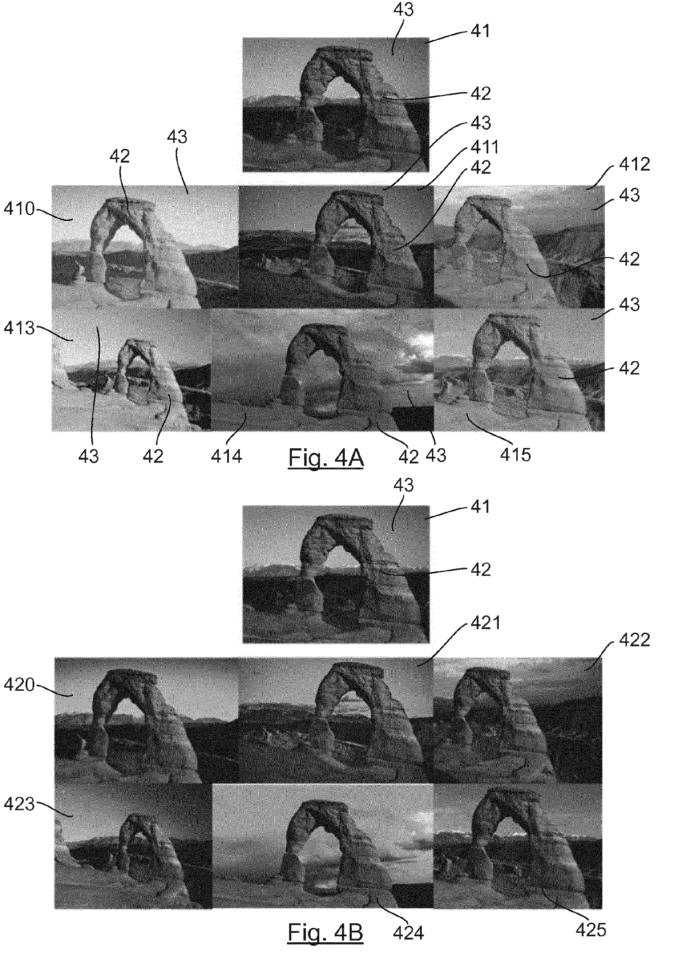

It can be noted that other clustering techniques could be used, for example a clustering based on a similarity of points of interest, or a more complex clustering on a similarity of color and on a similarity of points of interest as illustrated by Figure 4.

Optionally, said step of clustering delivers at least two clusters and comprises a substep (1122) of rejecting one of said at least two clusters when receiving (1121), from a user, a request of rejection, or when receiving (1121), from a user, a request of selection of said at least one cluster to homogenize among said at least two clusters.

Thus, these two steps permit the user to select (112) among the whole photo collection, the clusters of images to homogenize.

An Interface can be provided to the user in order that he could interact in a very easy and intuitive way on the number of clusters to homogenize.

In the case, of receiving (1121) a request of rejection from the user, the cluster pointed out by the user is rejected (1122), whereas in the case of receiving from the user, a request of selection of said at least one cluster to homogenize among said at least two clusters, the cluster(s) selected by the user is(are) conserved and the other(s) cluster(s) is (are) rejected (1122).

Such an option permits to reject a cluster of no interest for the user. For example, this is the case when a cluster is formed by images, which are "similar" because each of them does not present any similarity with any other clusters. Such images correspond thus to isolated images or images presenting capture problems and can be thus deleted or kept, but not processed by the following steps of determining and homogenizing of the present method.

Thanks to this option, the user can choose to select some clusters for making a photo album. For example, a user who had been to Venice during the carnival can choose to have a color-sorted album where each page or double page is used for a main color of disguise.

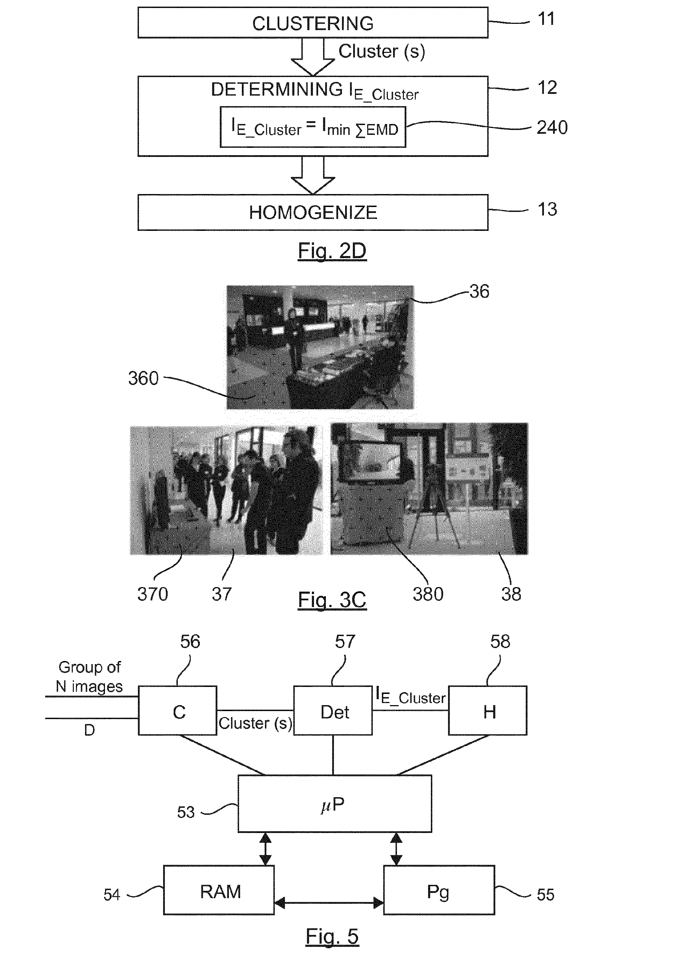

For example, at the end of a color-based clustering step (11), the three color clusters of figure 3A, 3B, 3C are obtained, the cluster of figure 3A gathering the five images 31, 32, 33, 34, 35, presenting a purple color similarity due to the purple areas (areas hatched in diagonal, from left to right 310, 320, 330, 340 and 350), the cluster of figure 3B gathering the five images 3001, 3002, 3003, 3004, 3005, presenting a green color similarity due to green areas (areas hatched in diagonal, from right to left) 3010, 3020, 3030, 3040 and 3050), the cluster of figure 3C gathering the three images 36, 37, 38, presenting an orange color similarity due to orange areas (360, 370 and 380).

These three clusters are such that the EMD distance in color space between the images, which constitute each of them, is lower than a maximum allowed distance D.

For example, a maximum allowed distance D can be set by default, or entered by the use. According to another example, the maximum allowed distance D can be determined from the distribution of distances and corresponds for example to a fixed percentage of the median value of the distances.

Then, for each cluster delivered automatically by the clustering step (11), an example image *I_{E_cluster}* is automatically or semi-automatically determined (12) for being used in the following homogenizing step (13).

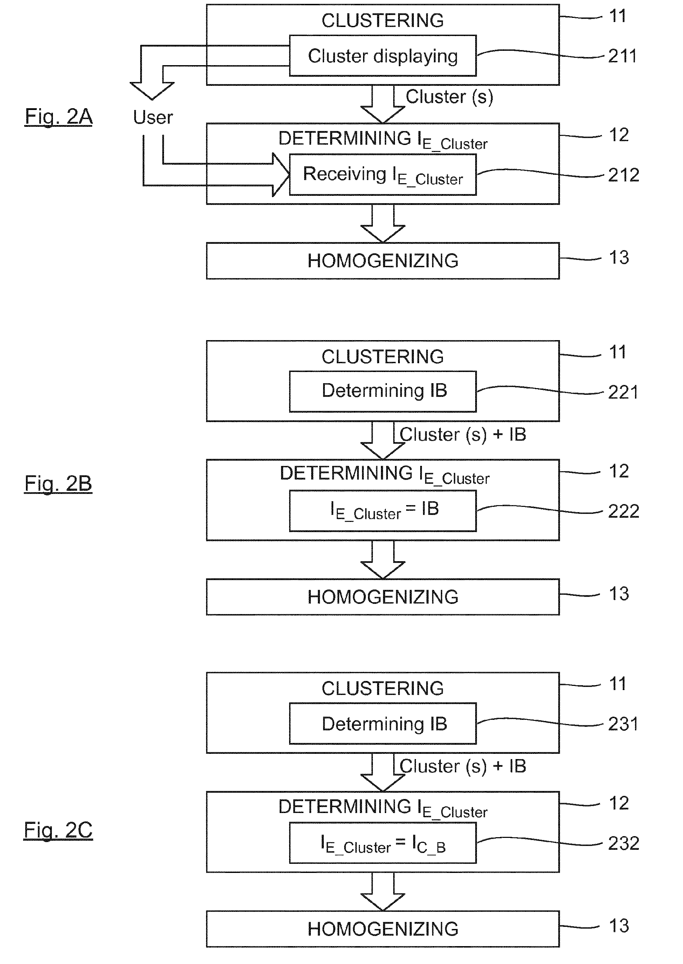

Four different embodiments of the step of determining an example image *I_{E_cluster},* also called centroid, from a cluster are detailed in the following and illustrated by figures 2A to 2D, each of these embodiment being able to be combined with the clustering step's features as previously described.

It has to be noted that the crucial point of the technique according to the present invention is that the clustering and homogenizing steps are linked by the determining step of an example image *I_{E_cluster},* which permits in comparison with prior art the homogenization of a whole cluster at a time using a "good example" image which is obtained using the cluster previously delivered by the clustering step.

In the prior art, for homogenizing a whole photo collections, the user would have to manually select such an example image, and it is possible that such a manually selected example image would be distant from the original image to homogenize, losing thus the intend of its contributor to the photo collection.

On the contrary, according to the present invention, since, the example image is determined from the cluster to homogenize, the example image presents a distance with the images of said cluster to homogenize, which is lower than the maximal predetermined value D.

And when several clusters are delivered by the clustering step, an appropriate example image is determined for each cluster, such a determining steps being able to be implemented in parallel for each cluster.

Each example image is then used for homogenizing (13) at least one image feature of each cluster to homogenize, which ensures that the distance between all original images and their modified version after the homogenizing does not exceed said predetermined value D.

Starting from such an example image, two classes of homogenizing methods are known to implement a modification of the original image(s) of the cluster, called an example-guided image modification.

The first class comprises methods based on a global processing operating at a global scale, called global methods. For example, such global methods act on the color histogram of the original image, by taking into account a color histogram level for deforming the color histogram of the original so that it matches the histogram of the example image/video.

Two examples of such global methods are described respectively by E. Reinhard ("Color Transfer between Images "), IEEE Computer Graphics and Applications, vol 21, issue 5 Sept/oct 2001, and by F. Pitie ("N-Dimensional Probability Density Function Transfer and its Application to Color Transfer"), IEEE International Conference on Computer Vision, 2005, pages 1434-1439, Vol. 2.

The second class of example-guided image modification methods comprises local methods relying on the computation of spatial correspondences between the source and example images (or videos). Taking into account these correspondences, a transformation of the characteristics of the source image can be implemented, using for example a regression.

An example of such a local method is described by Y. HaCohen *("NRDC: Non-Rigid Dense Correspondence with applications for Image Enhancement"),* ACM Transactions on Graphics (Proc. SIGGRAPH) August 2011.

Figure 4B illustrates the result that can be obtained using such a local NRDC method for homogenizing images belonging to the same cluster presenting an arch (42) front of the sky (43).

The original images (before the homogenizing) of such a cluster are illustrated by figure 4A, the example image *I_{E_cluster},* also called centroid, corresponding to the top image (41) and determined according one of the four embodiments as detailed in the following in relation with figures 2A to 2D.

Such a centroid image *I_{E_cluster}* 41 will be used as an example for homogenizing at least one feature, corresponding to the color, of the other original images 410, 411, 412, 413, 414, and 415 of the cluster.

Indeed, in the centroid *I_{E_cluster}* (41) and in the original images 411 and 414 the arch tint is orange-red while it is salmon in images 410, 412 and 415 and yellow in image 413. The sky (43) is also represented with different colors in the six original images of the cluster of Figure 4A. Indeed the color of the sky (43) in the centroid 41 and images 411, 413 and 415 is blue, while it is grey in figures 410 and 414 and blue-purple in image 412.

In the resulting figure 4B, the image feature corresponding to the color is homogenized by taking for example the redish an blue tints of the arch (42) and the sky (43) respectively of the centroid 41, delivering six homogenized modified images of the cluster with a red arch and a blue sky but captured using different point of views (indeed, the arch is more zoomed in the centroid 41 than in the original (or modified) image 413 (423 respectively)

It has to be noted that instead of the color, the modified image feature could be the a contrast image feature, the luminance image feature, the texture image feature or the white balance image feature....

It as to be also noted that several of the above-listed image features could be modified in the original images of the cluster using the centroid image 41 and one of the example-guided image modification methods above-listed.

For instance, two image features could be successively modified, the order of such homogenizing modifications would depend on the type of the considered image features to homogenize.

### 5.2 Description of a four embodiments permitting to determine an example image

### 5.2.1 First embodiment

A first embodiment permitting to determine an example image I_{E_cluster} for each cluster delivered by the clustering step (11) is illustrated by figure 2A.

According to said first embodiment, said step of clustering (11) comprises also a substep of displaying (211) to a user said cluster to homogenize.

Said step of displaying (211) is implemented for each clusters once they had been identified using for example the substeps (110, 111 (1110, 1111, 1112), 112) of the clustering technique illustrated in figure 1.

All the clusters can be displayed simultaneously on an interface, such interface permitting also the user to select/reject (112) a cluster as illustrated by figure 1.

Then, after this step of displaying (211) belonging to the clustering step (11), and according to this first embodiment, the step of determining (12) an example image I_{E_cluster}, implements a step of receiving (212), from said user, a selected example image for each cluster to homogenize.

Thus, if the user had selected three clusters to homogenize, the determining step consists in receiving (212) three example images I_{E_cluster}, one for each cluster to homogenize.

Regarding the example of figures 4A and 4B, the example image I_{E_cluster} (41) is thus one original image of the seven original images of the cluster of figure 4A, such image being considered as the best example image according to the user's personal judgement.

Then, as already described above the homogenizing step (13) is automatically performed.

### 5.2.2 Second embodiment

A second embodiment permitting to determine an example image I_{E_cluster} for each cluster delivered by the clustering step (11) is illustrated by figure 2B.

According to said second embodiment, said step of clustering (11) comprises also a substep of determining (221) an image barycentre *(IB)* of said cluster to homogenize.

Said step of determining (221) an image barycentre *(IB)* is implemented for each clusters once they had been identified using for example the substeps (110, 111 (1110, 1111, 1112), 112) of the clustering technique illustrated in figure 1.

Then, once the clustering step (11) finishes with this step of determining (221) an image barycentre *IB* for each cluster, the step of determining (12) an example image I_{E_cluster} consists in labelling (222) said image barycentre *IB* as the example image I_{E_cluster}, for each cluster to homogenize.

Said image barycentre *IB* is thus an input of the following step of determining (12) an example image I_{E_cluster}.

Thus, if the user had selected three clusters to homogenize, the determining step consists in labelling (222) three example images I_{E_cluster} corresponding to the three different image barycentres which had been determined (in parallel or not for each cluster) during the clustering step (11).

Regarding the example of figures 4A and 4B, the example image I_{E_cluster} (41) is thus a synthesized image (the image barycentre) and not one of the six original images (410 to 415) of the cluster of figure 4A.

Such centroid, corresponding to the image barycentre of the cluster, can be displayed or not to the user.

Then, as already described above the homogenizing step (13) is automatically performed.

### 5.2.3 Third embodiment

A third embodiment permitting to determine an example image I_{E_cluster} for each cluster delivered by the clustering step (11) is illustrated by figure 2C.

According to said third embodiment, said step of clustering (11) comprises also a substep of determining (231) an image barycentre *(IB)* of said cluster to homogenize.

Said step of determining (231) an image barycentre *(IB)* is implemented for each clusters once they had been identified using for example the substeps (110, 111 (1110, 1111, 1112), 112) of the clustering technique illustrated in figure 1.

Then, once the clustering step (11) finishes with this step of determining (231) an image barycentre *IB* for each cluster, the step of determining (12) an example image I_{E_cluster} consists in determining (232) the original image *(I_{C_IB})* of a considered cluster to homogenize, which is the closest (in terms of EMD) fromsaid image barycentre *IB.*

Said image barycentre *IB* is thus an input of the following step of determining (12) an example image I_{E_cluster}.

Thus, if the user had selected three clusters to homogenize, the determining step consists in determining (232) three example images I_{E_cluster}, each corresponding to the original image, which is the closest from each barycentre IB, which had been determined (in parallel or not for each cluster) during the clustering step (11).

Regarding the example of figures 4A and 4B, the example image I_{E_cluster} (41) is one original image of the seven original images of the cluster of figure 4A.

Then, as already described above the homogenizing step (13) is automatically performed.

### 5.2.4 Fourth embodiment

A fourth embodiment permitting to determine an example image I_{E_cluster} for each cluster delivered by the clustering step (11) is illustrated by figure 2D.

According to said fourth embodiment, the step of determining (12) an example image I_{E_cluster} consists in determining (240) automatically among the original images of said cluster to homogenize, the original image of said considered cluster such that the sum of the Earth Mover's Distances (EMD), between it and the other original images of the whole group of *N* images being out of the considered cluster to homogenize, is minimal.

Regarding the example of figures 4A and 4B, the example image I_{E_cluster} (41) is thus one original image of the seven original images of the cluster of figure 4A.

Then, as already described above the homogenizing step (13) is automatically performed.

### 5.3 Global Structures of a module for homogenizing at least one image feature of a group of N images

Finally, figure 5 presents a simplified structure of a device for homogenizing at least one image feature of a group of *N* images, *N* being an integer such that *N* > 0 according to the invention.

Regarding figure 5, a device for homogenizing at least one image feature of a group of *N* images, *N* being an integer such that *N* > 0, according to the invention, comprises a memory 54 comprising a buffer memory RAM, a processing unit 53 equipped for example with a microprocessor µP and driven by the computer program 55 implementing the method for homogenizing at least one image feature of a group of *N* images, *N* being an integer such that *N* > 2 according to the invention.

At initialization, the code instructions of the computer program 55 are for example loaded into a RAM and then executed by the processor of the processing unit 53.

According to the invention, the microprocessor of the processing unit 53 implements the steps of the method for homogenizing at least one image feature of a group of *N* images, *N* being an integer such that *N* > 0 described here above according to the instructions of the computer program 55. To this end, the device for homogenizing at least one image feature of a group of *N* images, *N* being an integer such that N > 0, comprises a module (56) for clustering said group of *N* images delivering at least one cluster to homogenize comprising at least three images of said group of *N* images, and presenting a distance between said at least three images lower than a maximal predetermined value *D,* a module (57) for determining an example image *(I_{E_cluster})* from said at least one cluster to homogenize, and a module (58) for homogenizing at least one image feature in said at least three images of said at least one cluster to homogenize.

## Claims

1. A method for homogenizing at least one image feature of a group of *N* images, *N* being an integer such that *N* > 2,
wherein said method implements the following steps :
- clustering (11) said group of *N* images delivering at least one cluster to homogenize comprising at least three images of said group of *N* images, and presenting a distance between said at least three images lower than a maximal predetermined value *D,*
- from said at least one cluster to homogenize, determining (12) an example image *(I_{E_cluster}),*
using said example image for homogenizing (13) said at least one image feature in said at least three images of said at least one cluster to homogenize.

2. The method for homogenizing at least one image feature of a group of N images according to claim 1, wherein said step of clustering delivers at least two clusters and wherein said steps of determining and of homogenizing are successively implemented in parallel for each of said at least two clusters.

3. The method for homogenizing at least one image feature of a group of N images according to anyone of the claims 1 or 2, wherein said distance is an Earth Mover's Distance (EMD) (110).

4. The method for homogenizing at least one image feature of a group of N images according to anyone of the claims 1 to 3, wherein said clustering is a color-based clustering.

5. The method for homogenizing at least one image feature of a group of N images according to anyone of claims 1 to 4, wherein said step of clustering delivers at least two clusters and comprises a substep of rejecting (1122) one of said at least two clusters when receiving (1121), from a user, a request of rejection, or when receiving (1122), from a user, a request of selection of said at least one cluster to homogenize among said at least two clusters.

6. The method for homogenizing at least one image feature of a group of N images according to anyone of the preceding claims, wherein said step of clustering implements at least one iteration (111) of the following substeps:
- forming (1110) an undirected graph G comprising nodes, each node representing an image *Iᵢ* of said group of *N* images and being connected between each other by a distance *dᵢⱼ*, with 1 ≤ *i* ≤ *N and i* ≠ *j* with 1 ≤ *j* ≤ *N,*
- among said *N* images, determining (1111) a source image (*Iₛ*) and a target image (*Iₜ*) presenting the largest distance max_*dᵢⱼ* between them,
- cutting (1112) said graph into two clusters between said source image (*Iₛ*) and said target image (*Iₜ*), each cluster being used for a following iteration (1113) if said cluster presents an energy higher than a predetermined value, or if the largest distance max_*dᵢⱼ* of each cluster is higher than said maximal predetermined value *D.*

7. The method for homogenizing at least one image feature of a group of N images according to anyone of the preceding claims, wherein said step of clustering comprises a substep of displaying (211) to a user said cluster to homogenize,
and wherein said step of determining an example image *(I_{E_cluster}),* from said at least one cluster to homogenize, implements a step of receiving (212), from said user, a selection of said example image *(I_{E_cluster})* among said at least three images of said cluster to homogenize.

8. The method for homogenizing at least one image feature of a group of N images according to anyone of the claims 1 to 6, wherein said step of clustering comprises a substep of determining (221) an image barycentre *(IB)* of said cluster to homogenize, and wherein said example image *(I_{E_cluster})* corresponds (222) to said image barycentre *(IB).*

9. The method for homogenizing at least one image feature of a group of *N* images according to anyone of the claims 1 to 6, wherein said step of clustering comprises a substep of determining (231) an image barycentre *IB of* said cluster to homogenize,
and wherein said example image *(I_{E_cluster})* corresponds (232) to an image *(I_{C_IB})* of said at least three images of said cluster to homogenize being the closest from said image barycentre *(IB).*

10. The method for homogenizing at least one image feature of a group of *N* images according to claims 2 and 5, wherein said example image *(I_{E_cluster})* is determined (240) among said at least three images of said cluster to homogenize, and corresponds to one of said at least three images such that the sum of the Earth Mover's Distances (EMD), between it and the other images of said group of *N* images being out of said cluster to homogenize, is minimal.

11. The method for homogenizing at least one image feature of a group of *N* images according to anyone of the preceding claims, wherein said at least one image feature to homogenize is of the type belonging to the group comprising:
- a color image feature,
- a contrast image feature,
- a luminance image feature,
- a texture image feature,
- a white balance image feature.

12. The method for homogenizing at least one image feature of a group of *N* images according to anyone of the preceding claims, wherein said method comprises a preliminary step of receiving (10) a maximal predetermined value *D* entered by a user.

13. A device for homogenizing at least one image feature of a group of *N* images, *N* being an integer such that *N* > 2,
wherein said device for homogenizing at least one image feature of a group of *N* images comprises:
- a module (56) for clustering said group of *N* images delivering at least one cluster to homogenize comprising at least three images of said group of *N* images, and presenting a distance between said at least three images lower than a maximal predetermined value D,
- a module (57) for determining an example image from said at least one cluster to homogenize,
- a module (58) for using said example image for homogenizing said at least one image feature in said at least three images of said at least one cluster to homogenize.

14. A computer program product downloadable from a communication network and/or recorded on a medium readable by computer and/or executable by a processor, comprising program code instructions for implementing the steps of the method for homogenizing at least one image feature of a group of *N* images, *N* being an integer such that *N* > 2 according to one of claims 1 to 12.

15. A non-transitory computer-readable medium comprising a computer program product recorded thereon and capable of being run by a processor, including program code instructions for implementing the steps of the method for homogenizing at least one image feature of a group of *N* images, *N* being an integer such that *N* > 2 according to one of claims 1 to 12.
